# EUROPEAN PATENT SPECIFICATION

(11) **EP 2 297 942 B1**
(45) Date of publication and mention of the grant of the patent: **12.10.2011**
(21) Application number: 09712394.7
(22) Date of filing: 13.02.2009
(51) Int. Cl.: H04N 5/44, G09G 5/00, G06F 3/14, H04N 5/63

(54) **AN HDMI CONNECTION METHOD**
HDMI-VERBINDUNGSVERFAHREN
PROCÉDÉ DE CONNEXION HDMI

(30) Priority: 20.02.2008 TR 200801107
(43) Date of publication of application: 23.03.2011
(73) Proprietor: Arçelik Anonim Sirketi, 34950 Istanbul (TR)
(72) Inventor: UZUN, Mustafa Ilker, 34524 Istanbul (TR); BULUT, Mert, 34524 Istanbul (TR); AG, Veli, 34524 Istanbul (TR); OZTURK, Cemal Seref Oguzhan, 34524 Istanbul (TR)
(86) International application number: PCT/IB2009/050591
(87) International publication number: WO 2009/104114

(56) References cited:
- US-A1- 2007 028 281
- US-A1- 2007 252 746
- "High-Definition Multimedia Interface Specification Version 1.3" INTERNET CITATION, [Online] XP002391813 Retrieved from the Internet: URL:http://www.hdmi.org/download/HDMI_Spec _1.3_GM1.pdf> [retrieved on 2006-07-24]

## Description

### Field of the Invention

The present invention relates to a method used in connecting receiver and transmitter devices to each other via HDMI (High Definition Multimedia Interface).

### Prior Art

HDMI compatible connectors are used for establishing connection in HDMI technology which is an interface that enables digital transfer of audio and video signals between receiver (e.g. television) and transmitter (e.g. DVB module, digital satellite receiver) devices. There are provided 19 pins in widely used HDMI connectors each of which is designated for specific functions. For example the pin no. 18 is designated for +5V power input connection. However there is not provided any pin for the power output on the connector. For this reason, in devices which are connected via an HDMI connector, power can be supplied from the transmitter to the receiver, but it can not be supplied from the receiver to the transmitter. In HDMI connectors, the pin no. 14 is left idle as a reserved pin and this pin is not allocated for any function.

The international patent document no. W02007098411, a state of the art application, discloses a communication network wherein two lines are used which provide power supply from the transmitter to the receiver. One of these lines is low supply current while the other is high supply current. The low supply current line is maintained active at all times and it supplies power to the circuit that monitors the signal activity. When signal activity is detected, the high supply current is activated whereby cost and consumption are lowered when there is no signal activity.

Due to the fact that power supply can not be provided from the receiver to the transmitter in the state of the art applications of the HDMI connections, the transmitter, in addition to the receiver, needs to be supplied from a separate power supply. Accordingly, there is no solution provided for the transmitter device to be detected by the receiver device for control of the power supply to be provided from the receiver to the transmitter.

The US 2007/0252746 A1 discloses a system, method and apparatus for inline audio/visual conversion, wherein power to an inline converter is provided over the A/V cable that couples the converter to a destination such as a selector. A +5V reference voltage is supplied to pin no. 18 of HDMI sink connector ports 601. If an inline converter is connected that requires power, a high-current of around 500 mA is supplied with a +5V reference voltage by the HDMI selector. Pin no. 14 is thereby used to transmit messages between the selector and the converter.

The "High-Definition Multimedia Interface Specification Version 1.3"; XP002391813; URL:http://www.hdmi.org/download/HDMI_Spec_1.3_GM1.pdf [retrieved on 2006-07-24] discloses a HDMI connection between a HDMI transmitter that is the HDMI Source and a HDMI receiver that is the HDMI sink. The HDMI connector provides a pin allowing the Source to supply +5.0 Volts to the cable and Sink. All HDMI Sources shall be able to supply a minimum of 55 mA to the +5V power pin. Further it is disclosed that in HDMI connector Type A and C pin no. 18 is used as power pin, whereas in HDMI connector Type B pin no. 28 is used as power pin.

### Summary of the Invention

The objective of the present invention is to realize a connection method in devices with HDMI connection therebetween, wherein power supply is provided to the transmitter device via the receiver device by using the HDMI connection cable. Another objective of the invention is to realize a connection method wherein power supply of receiver and transmitter devices is provided with a single power supply.

A further objective of the invention is to realize a connection method which provides cost advantage owing to the fact that a separate power supply is not used for the transmitter.

With the help of the connection method, which is realized to fulfill the objective of the present invention and defined in Claim 1 and in its dependent claims, power supply is provided from the receiver to the transmitter via the HDMI connector. Thus, the voltage supply required particularly for the modular devices is provided and there is no need for using a separate power supply (e.g. adaptor) for these devices. Power supply from the receiver to the transmitter is provided via the reserved pin no. 14 which does not have any function in the HDMI connectors.

Additionally, according to the connection method of the present invention, in order for the power supply to be provided from the receiver to the transmitter in a controlled manner, the voltage on the pin no. 18 used in standard HDMI connections in transmitting power from the transmitter to the receiver is controlled by the receiver whereby it is determined whether the transmitter device is connected or not. Thus when the transmitter device is connected, power is transmitted from the receiver to the transmitter via the pin no. 14; whereas when no transmitter is connected or a non-modular transmitter (e.g. DVD player, play station) is connected, power supply from the receiver to the transmitter is cut and power is not transmitted.

In an alternative embodiment of the invention, in order for the transmitter to be supplied by the receiver, the pin no. 18 which is allocated for providing supply from the transmitter to the receiver in a standard HDMI connection is used in the opposite direction whereby the transmitter is provided with power supply from the receiver.

### Detailed Description of the Invention

The HDMI connection method realized to fulfill the objective of the present invention and the devices in which the method is applied are illustrated in the accompanying figures in which,
Figure 1 is the flowchart of the method of the invention.
Figure 2 is the schematic view of the connection between the receiver and transmitter devices in which the method of the invention is applied.

The components shown in the figures are numbered as follows:
- 1.: Receiver
- 2.: Transmitter
- 3.: Connector
- 4.: Detection circuit
- 5.: ,51. Resistor
- 6.: Transistor

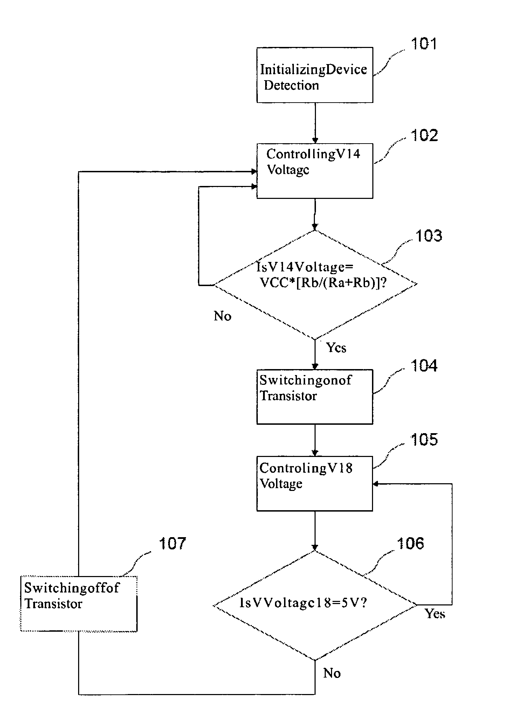

The method of the invention essentially comprises the steps of (Figure 1)
- Initializing device detection (101),
- Controlling pin 14 voltage (V14) (102),
- Determining whether pin 14 voltage (V14) is equal to Rb/(Ra+Rb) times the VCC voltage (103),
- If pin 14 voltage (V14) is not equal to Rb/(Ra+Rb) times the VCC voltage, re-controlling pin 14 voltage (V14) (102)
- If pin 14 voltage (V14) is equal to Rb/(Ra+Rb) times the VCC voltage, switching on the transistor (6) (104),
- Controlling pin 18 voltage (V18) (105),
- Determining whether pin 18 voltage (V 18) is 5V (106) or not,
- If pin 18 voltage (V18) is 5V, re-controlling pin 18 voltage (V18) (105),
- If pin 18 voltage (V18) is not 5V, switching off the transistor (107) and returning to step 102.

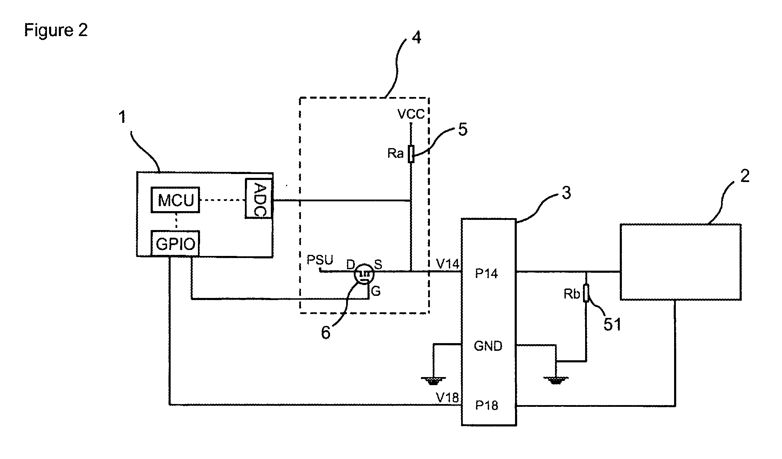

The HDMI connection configuration wherein the method of the invention is applied, comprises a receiver (1) which presents the audio and video signals that it receives to the user, a transmitter (2) which transmits to the receiver (1) the audio and video signals of the broadcast that it receives, a connector (3) which provides the connection that is used for the digital data transfer between the receiver (1) and the transmitter (2), a detection circuit (4) comprising at least one pull-up resistor (5) and at least one transistor (6), and at least one pull-down resistor (51) (Figure 2).

According to the mentioned connection configuration, controlled power transfer from the receiver (1) to the transmitter (2) is provided via using pins no. 14 and/or 18 (P14 and P 18) of the HDMI connector (3). Detection circuit (4) and pull-down resistor (51) are used to realize the method of the invention which enables the transmitter (2) to be detected and supplied by the receiver (1).

The detection circuit (4) enables to determine whether the transmitter (2) is connected to the receiver (1) or not and to provide supply if the transmitter (2) is connected, and if not, to cut the supply. A transistor (6) which performs switching, preferably a MOSFET is used for supply control. Drain output of the transistor (6) is connected to the power supply unit (PSU) while its source output is connected to pin no. 14 of the connector (3) and its gate output is connected to the receiver (1). The pull-up resistor (5) having Ra resistance value is connected between the VCC voltage supply and pin no. 14, and the pull-down resistor (51) having Rb resistance value is connected between pin no. 14 and ground (GND). According to the connection configuration of the detection circuit (4), there is also provided a connection between pin no. 14 and the receiver (1). Furthermore, the receiver (1) and the transmitter (2) are connected to each other via pin no. 18 in accordance with standard HDMI connections.

As the first step of applying the method of the invention in the above mentioned receiver (1) - transmitter (2) connection, device detection is initialized (101). Device detection process starts upon switching on of the receiver (1) device. For detection and controlled supply of the transmitter (2) by the receiver (1), first of all, the voltage on pin no. 14 (V14) is controlled by the receiver (1) (102). For this purpose, the line coming from pin no. 14 is connected to the analog-digital converter (ADC) input of the receiver and a signal which informs that the voltage is either high or low according to the value of V14 voltage is transmitted to the microprocessor (MCU) of the receiver (1) by the ADC. The value of V14 voltage varies according to whether the transmitter (2) device is connected or not. When a transmitter (2) is connected to the receiver (1), a constant voltage will occur at pin no. 14 depending on the values (Ra, Rb) of the pull-up and pull-down resistors (5, 51). Since this voltage will be equal to the part of the VCC voltage remaining on the pull-down resistor (51), its value will be VCC*[Rb/(Ra+Rb)]. Therefore, in the next step of the method, it is determined whether or not the voltage at pin no. 14 (V 14) is equal to the value of VCC * [Rb/(Ra+Rb)] (103). If the voltage is not equal to VCC * [Rb/(Ra+Rb)], ADC unit of the receiver (1) communicates to the microprocessor the information that the voltage is low. Thus it is understood that the transmitter (2) is not connected. In this case, it is returned to step 102 and the process of interrogating about whether or not the transmitter (2) is connected is repeated and continued until a transmitter (2) is connected. If V14 voltage is determined to be equal to the value of VCC * [Rb/(Ra+Rb)], it is understood that the transmitter (2) device is connected. Connection of the transmitter (2) is detected by the microprocessor of the receiver (1) by means of the signal coming via ADC, and in order to provide supply to the transmitter (2), the transistor (6) is switched on by sending a signal to the gate output of the transistor (6) via the General Purpose Input/Output unit (GPIO) (104). Thus there is provided conduction between the drain and source terminals of the transistor (6) and power is supplied to the transmitter (2) device from the power supply (PSU) via the line passing through pin no. 14.

With the power supply starting to be provided to the transmitter (2) by switching on of the transistor (6), the transmitter (2) begins to operate and the voltage (V18) at the output of pin no. 18 (P18) has the value of 5V in accordance with the HDMI standard. As long as the transmitter (2) is operational, there is the said voltage of 5V at the P18 node. In case the transmitter (2) device is switched off, dismantled or connection thereof with the receiver (1) is interrupted in any way, V18 voltage is reset. Thus, whether or not the connection between the transmitter (2) and the receiver (1) continues can be understood by monitoring the value of V18 voltage. For this purpose, the next step of the method of the invention is to control V18 voltage at the P18 node (105). The receiver (1) monitors V18 voltage value by means of the line between pin no. 18 and the GPIO unit of the receiver (1). It is determined whether V18 voltage is 5V or not (106) and if V18 voltage is 5V it is understood that the connection continues and control of this voltage is continued (105). In case V18 voltage is not equal to 5V, it is understood that connection of the transmitter (2) with the receiver (1) has expired and the transistor (6) is switched off by the command signal transmitted from the microprocessor (MCU) via the GPIO unit, and power transmission to the transmitter (2) is cut (107). In order to be able to reestablish the power supply in case of remounting of the transmitter (2) device after it is removed, the microprocessor in the receiver (1) continues to control the V14 voltage at the ADC input (102).

In another embodiment of the invention, pin no. 18 is used instead of pin no. 14 in order for the transmitter (2) to be supplied by the receiver (1) in HDMI connection. In this alternative embodiment, pin no. 14, which is defined for providing supply from the transmitter (2) to the receiver (1) in accordance with HDMI connection standard, is used for supplying power in the opposite direction. The said supply is provided by means of a modified transmitter (2) element (e.g. DVB module) accommodating a battery thereon. The transmitter (2) is supplied from the battery thereon for a short period of time with the establishment of the connection, and in the meantime, it introduces itself to the receiver (1) via the CEC pin no. 13 designated for the communication between the receiver (1) and the transmitter (2). The receiver (1), upon determining that the modified transmitter (2) is connected, transfers power to the transmitter (2) by providing supply via pin no. 18 in the opposite direction. Thereupon, the battery that provides temporary supply is deactivated and the transmitter (2) continues to be supplied by the receiver (1).

According to the method of the invention described above in detail, the transmitter (2) device, among the devices which have HDMI connection therebetween, is supplied by the receiver (1) device via the reserved pin no. 14 whose function is not defined in HDMI connectors. A circuit structure is formed which is comprised of a detection circuit (4) and pull-up and pull-down resistors (5, 51) in order for the supply to be provided in a controlled manner. This way the receiver (1) can determine whether the transmitter (2) is connected or not and power supply will be provided only when a connection is detected. In an alternative embodiment of the method of the invention, power supply is provided from the receiver (1) to the transmitter (2) by using pin no. 18 in the opposite direction according to the standard application.

## Claims

1. A HDMI connection method for use in systems comprising receiver (1) and transmitter (2) devices between which there is HDMI connection, wherein pin no. 18 is designated for +5V power input connection and pin no. 14 is reserved, **characterized in that** controlled power transmission is provided from the receiver (1) to the transmitter (2) by using a connection line passing through pin no. 14 of a HDMI connector (3),
including the steps of
• Detecting, by the receiver (1), pin 14 voltage (V 14) (102),
• Determining whether pin 14 voltage (V 14) is equal to Rb/(Ra+Rb) times a VCC voltage (103), wherein a pull-up resistor (5) having Ra resistance value is connected between a VCC voltage supply and pin no. 14 at a side of the receiver (1), and a pull-down resistor (51) having Rb resistance value is connected between pin no. 14 and ground (GND) at a side of the transmitter (2),
• If pin 14 voltage (V 14) is not equal to Rb/(Ra+Rb) times the VCC voltage, re-detecting pin 14 voltage (V14) (102)
• If pin 14 voltage (V 14) is equal to Rb/(Ra+Rb) times the VCC voltage, switching on a transistor (6) (104) connected between a power supply unit and pin no. 14,
• Detecting, by the receiver (1), pin 18 voltage (V18) (105),
• Determining whether pin 18 voltage (V18) is 5V (106) or not,
• If pin 18 voltage (V 18) is 5 V, re-detecting pin 18 voltage (V 18) (105),
• If pin 18 voltage (V18) is not 5V, switching off the transistor (6) (107) and returning to the step of detecting pin 14 voltage (V 14).

2. A HDMI connection method according to Claim 1, **characterized in that**, by using a detection circuit (4) comprising a transistor (6) that performs switching, and a pull-up resistor (5), and a pull-down resistor (51), power supply is provided when transmitter module (2) is connected and supply is cut off when the transmitter module (2) is not connected.

3. A HDMI connection method according to any of the preceding claims **characterized in that** the voltages on pins no. 14 and 18 are detected to determine whether the transmitter (2) is connected to the receiver (1) or not.

## Patentansprüche

1. HDMI-Verbindungsverfahren zum Verwenden in Systemen, die eine Empfangs- (1) und eine Sendevorrichtung (2) umfassen, zwischen denen eine HDMI-Verbindung vorliegt, wobei der Pin Nr. 18 für die +5V-Spannungseingangsverbindung vorgesehen und der Pin Nr. 14 reserviert ist, **dadurch gekennzeichnet, dass** über eine Verbindungsleitung, die durch den Pin Nr. 14 eines HDMI-Anschlusses (3) verläuft, eine gesteuerte Spannungsübertragung von der Empfangsvorrichtung (1) an die Sendevorrichtung (2) bereitgestellt wird,
umfassend folgende Schritte :
• Erkennen von Spannung (V14) an Pin 14 (102),
• Bestimmen, ob die Spannung (V14) an Pin 14 dem Rb/(Ra+Rb)-fachen einer VCC-Spannung (103) entspricht, wobei ein Pull-up-Widerstand (5) mit einem Ra-Widerstandswert zwischen einer VCC-Spannungsversorgung und Pin Nr. 14 verbunden ist, und ein Pull-down-Widerstand (51) mit einem Rb-Widerstandswert zwischen Pin Nr. 14 und der Masse (GND) verbunden ist,
• wenn die Spannung (V 14) an Pin 14 nicht dem Rb/(Ra+Rb)-fachen der VCC-Spannung entspricht, Bestimmen der Spannung (V14) an Pin 14 wieder (102),
• wenn die Spannung (V14) an Pin 14 dem Rb/(Ra+Rb)-fachen der VCC-Spannung entspricht, Einschalten eines Transistors (6) (104),
• Erkennen von Spannung (V18) an Pin 18 (105),
• Bestimmen, ob die Spannung an Pin 18 (V18) 5V beträgt oder nicht (106),
• wenn die Spannung an Pin 18 (V18) 5V beträgt, Bestimmen der Spannung an Pin 18 (V18) wieder (105),
• wenn die Spannung an Pin 18 (V18) nicht 5V beträgt, Ausschalten des Transistors (6) (107) und Zurückkehren zum Schritt des Bestimmens der Spannung an Pin 14 (V14).

2. HDMI-Verbindungsverfahren nach Anspruch 1, **dadurch gekennzeichnet, dass** durch Verwenden eines Erkennungsschaltkreises (4), der einen Transistor (6), der Schaltvorgänge ausführt, und einen Pull-up-Widerstand (5) und einen Pull-down-Widerstand (51) umfasst, eine Spannungsversorgung bereitgestellt wird, wenn das Sendemodul (2) verbunden ist, und die Versorgung unterbrochen wird, wenn das Sendemodul (2) nicht verbunden ist.

3. HDMI-Verbindungsverfahren nach einem der vorangehenden Ansprüche, **dadurch gekennzeichnet, dass** die Spannung an den Pins Nr. 14 und 18 erkannt wird, um zu bestimmen, ob die Sendevorrichtung (2) mit der Empfangsvorrichtung (1) verbunden ist oder nicht.

## Revendications

1. Une méthode de connexion HDMI pour utiliser dans des systèmes comprenant le récepteur (1) et l'émetteur (2) entre lesquels il y a une connexion HDMI, où la broche 18 pour la connexion d'alimentation +5V et la broche 14 est réservée, **caractérisée en ce que** la transmission de puissance contrôlée est fournie du récepteur (1) à l'émetteur (2) en utilisant une ligne de connexion qui passe par la broche 14 d'un connecteur HDMI (3),
comprenant les étapes de
• Détecter la tension de la broche 14 (V 14) (102),
• Déterminer si la tension de la broche 14 (V 14) est égale à Rb/(Ra+Rb) fois une tension VCC (103), où une résistance de rappel vers le haut (5) ayant une résistance Ra est connectée entre une tension d'alimentation VCC et la broche, et une résistance de rappel vers le bas (51) ayant une résistance Rb est connectée entre la broche 14 et la masse (GND),
• Si la tension de la broche 14 (V 14) n'est pas égale à Rb/(Ra+Rb) fois la tension VCC, détecter la tension de la broche 14 (V 14) de nouveau (102),
• Si la tension de la broche 14 (V 14) est égale à Rb/(Ra+Rb) fois la tension VCC, allumer un transistor (6) (104),
• Détecter la tension de la broche 18 (V 18) (105),
• Déterminer si la tension de la broche 18 (V 18) est 5V (106) ou non,
• Si la tension de la broche 18 (V 18) est 5V, détecter la tension de la broche 18 (V 18) de nouveau (105)
• Si la tension de la broche 18 (V 18) n'est pas 5V, éteindre le transistor (6) (107) et retourner à l'étape de détecter la tension de la broche 14 (V 14)

2. Une méthode de connexion HDMI selon la Revendication 1, **caractérisée en ce que**, en utilisant un circuit de détection (4) comprenant un transistor (6) qui effectue la commutation, et une résistance de rappel vers le haut (5), et une résistance de rappel vers le bas (51), l'alimentation est fournie lorsque le module émetteur (2) est connecté et l'alimentation est coupée lorsque le module émetteur (2) n'est pas connecté.

3. Une méthode de connexion HDMI selon l'une quelconque des revendications précédentes, **caractérisée en ce que** les tensions sur les broches 14 et 18 sont détectées pour déterminer si l'émetteur (2) est connecté au récepteur (1) ou non.
